# EUROPÄISCHE PATENTSCHRIFT

(11) **EP 1 730 428 B1**
(45) Veröffentlichungstag und Bekanntmachung des Hinweises auf die Patenterteilung: **11.07.2007**
(21) Anmeldenummer: 05717137.3
(22) Anmeldetag: 23.03.2005
(51) Int. Cl.: F16J 15/32

(54) **LAMELLENDICHTUNG, INSBESONDERE FÜR EINE GASTURBINE, SOWIE VERFAHREN ZU DEREN HERSTELLUNG**
LAMELLAR SEAL, ESPECIALLY FOR A GAS TURBINE, AND METHOD FOR THE PRODUCTION THEREOF
JOINT A LAMELLES DESTINE NOTAMMENT A UNE TURBINE A GAZ ET SON PROCEDE DE PRODUCTION

(30) Priorität: 30.03.2004 DE 102004016173
(43) Veröffentlichungstag der Anmeldung: 13.12.2006
(73) Patentinhaber: Alstom Technology Ltd, 5400 Baden (CH)
(72) Erfinder: HOEBEL, Matthias, CH-5210 Windisch (CH); RHODES, Nigel, Anthony, Newbold Verdon Leicestershire LE9 9LY (GB); SCHNELL, Alexander, CH-5400 Baden (CH); BREHM, Walter, CH-5412 Gebenstorf (CH)
(86) Internationale Anmeldenummer: PCT/EP2005/051351
(87) Internationale Veröffentlichungsnummer: WO 2005/095829

(56) Entgegenhaltungen:
- US-B1- 6 343 792

## Beschreibung

### TECHNISCHES GEBIET

Die vorliegende Erfindung bezieht sich auf das Gebiet der Dichtung von rotierenden Maschinen. Sie betrifft eine Lamellendichtung gemäss dem Oberbegriff des Anspruchs 1 sowie ein Verfahren zum Herstellen einer solchen Lamellendichtung.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert.

Die Steuerung des Gasstroms innerhalb der Gasturbine ist von überragender Bedeutung im Hinblick sowohl auf die Funktionalität als auch die Effektivität. An verschiedenen Stellen entlang der Rotorwelle werden Dichtungs-Technologien verwendet, um den axialen Gasstrom entlang der Welle zu verringern. Dieses ist besonders wichtig neben den Lagern, um zu verhindern, dass das Öl, das in den Lagern benutzt wird, durch die heissen Gase des Gasstroms überhitzt.

Traditionsgemäß werden in dieser Situation zwei Arten von Dichtungs-Technologien - meist alternativ, manchmal auch miteinander kombiniert - benutzt. Dies sind Labyrinthdichtungen und Bürstendichtungen.

Labyrinthdichtungen haben keinen Metall-Metall-Kontakt zwischen dem Rotor und dem Stator; daher ist ihr Dichtungseffekt verhältnismäßig klein. Jedoch bieten sie den Vorteil der niedrigen Rotationsreibung und der deswegen praktisch unbegrenzten Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Der Gebrauch dieser Technologien für das Abdichten in den Gasturbinen hat zahlreiche Einschränkungen. Erstens ist die axiale Druckdifferenz, der sie widerstehen können, noch ziemlich niedrig. Im Falle der Bürstendichtungen liegt dies an den Borsten, welche die gleiche Steifheit in axialer und in Umfangsrichtung haben: Hohe Drücke können die Borsten veranlassen, in axialer Richtung nachzugeben. Auch ist die Fähigkeit der Dichtungen, eine bedeutende Radialbewegung zuzulassen und ihr zu widerstehen, niedrig.

Das Design einer Bürstendichtung ist häufig ein Kompromiss zwischen dem Verwenden einer Unterstützungsplatte, die genügend axiale Unterstützung geben soll, und dem Nicht-Einschränken der Radialbewegung.

Um die Nachteile der bekannten Bürstendichtungen zu vermeiden, ist in der US-B1-6,343,792 eine Lamellendichtung ("leaf seal") vorgeschlagen worden, welche die gleiche Funktion wie entweder eine Labyrinthdichtung oder eine Bürstendichtung ausübt, aber die Vorteile von beiden aufweist. Anstelle der Borsten, die aus Drähten mit kreisförmigem Querschnitt hergestellt werden, werde dünnen Metalllamellen oder -blätter in bestimmter Anordnung zusammengebaut (siehe z.B. die Fig. 3 der US-B1-6,343,792 oder die Fig. 1 der vorliegenden Anmeldung). Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein Abstand von einigen Mikron erzeugt und beibehalten werden, so dass die Abnutzung, die Reibungshitze und die Reibungsverluste bis fast auf Null verringert werden.

Das grundlegende Design bezieht eine Anzahl von dünnen Metalllamellen ein, die zwischen sich einen kontrollierten Luftspalt aufweisen und in einem vorgegebenen Winkel zum Radius befestigt werden. Der Luftspalt ist ein kritischer Designparameter: Er ermöglicht das Auftreten eines Luftstroms, um damit den hydrodynamischen Effekt zu erzeugen; er darf aber nicht so groß sein, um einen übermässigen axialen Leckstrom zu erlauben.

Zwei Varianten des Lamellendichtungs-Designs sind möglich: Bei der einen Variante werden die Lamellen nach unten geblasen, bei der anderen dagegen aufwärts. Die Variante mit den nach unten geblasenen Lamellen schliesst ein, dass man einen Abstand zwischen den Lamellenspitzen und der Welle während dem Zusammenbau und dem Anfahren hat, und dass dieser Spalt durch den Einsatz eines Luftstroms zwischen den Lamellen auf sehr kleine Werte heruntergefahren wird. Andererseits schliesst die Variante mit dem Aufwärtsblasen ein, dass man während des Anfahrens eine geringfügige gegenseitige Beeinflussung zwischen den Lamellenspitzen und der Welle hat, und einen Abstand erzeugt, wenn die Welle beschleunigt. In beiden Fällen ist die Strömung des Mediums durch die Luftspalte zwischen den Lamellen kritisch, ebenso wie die Steuerung des inneren Durchmessers der Dichtung, der durch die Lamellenspitzen erzeugt wird.

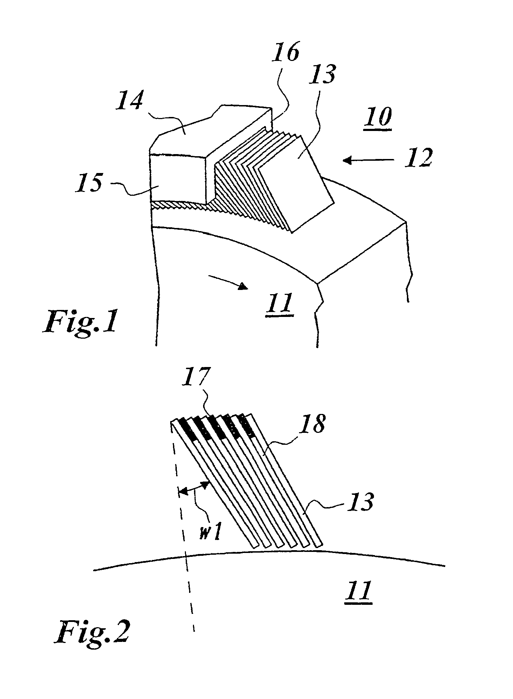

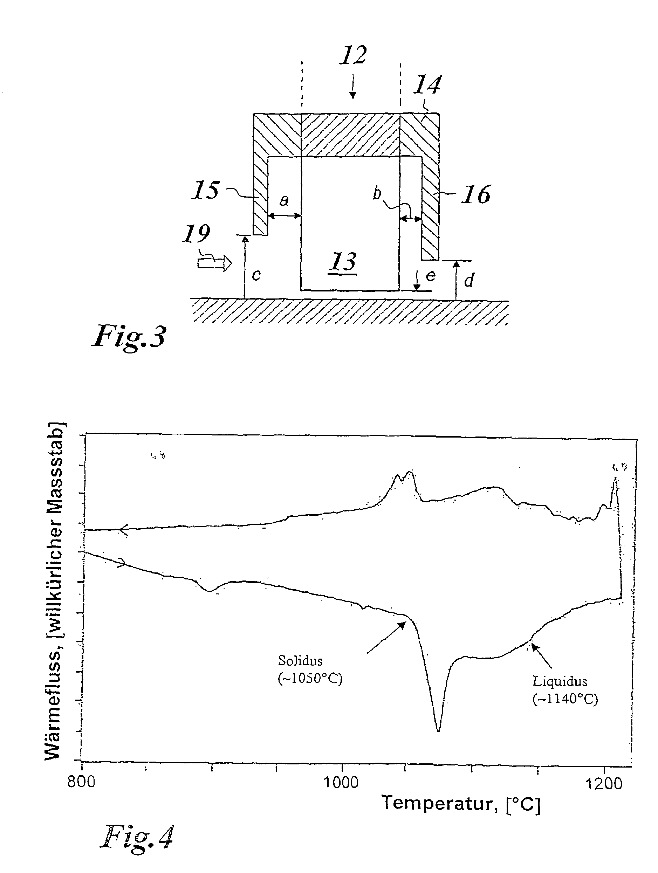

Der Luftstrom durch die Lamellen kann durch Verwendung einer vorderen und einer hinteren Platte verändert werden, die einen schmalen Spalt zwischen den Oberflächen des Lamellenpakets und den Platten frei lassen (siehe die o.g. Fig. 1 und 3). Ein sorgfältiges Design dieser Geometrien macht es möglich, die Aufwärts-oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des Lamellendichtungskonzeptes ist eine grössere Toleranz der Radialbewegung als bei den Labyrinth- oder Bürstendichtungen. Dies erfordert dort einen grossen Abstand zwischen dem inneren Durchmesser der vorderen und rückseitigen Platten und der Welle.

Abhängig von der gewählten Geometrie für die Dichtung, und von dem Durchmesser der zu dichtenden Welle, kann die Anzahl der Lamellen einige Tausend oder zig Tausende betragen. Die Genauigkeit, mit der diese hergestellt, zusammengebaut und verbunden werden können, wobei ein reproduzierbarer Luftspalt zwischen jedem Paar von Lamellen sichergestellt wird, ist kritisch für die erfolgreiche Implementierung jedes möglichen Dichtungsdesigns.

Das Fügeverfahren zum Fixieren der Lamellen in ihrer Position könnte eine mechanische Technik, wie Festklemmen, Schweissen oder Hartlöten oder jede mögliche Kombination davon sein. Es ist dabei ganz offensichtlich wichtig, dass eine minimale Störung der Lamellen oder ihrer relativen Positionen während des Fügeprozesses auftritt.

In der o.g. Druckschrift US-B1-6,343,792 sind bereits verschiedene Fügeverfahren vorgeschlagen worden. Bei den zu den Fig. 1 bis 21 der Druckschrift gehörenden Ausführungsbeispielen werden die Lamellen mit ihrer oberen Querkante in ein Gehäuse hart eingelötet. Über den Hartlötprozess im Einzelnen werden keine näheren Angaben gemacht.

### DARSTELLUNG DER ERFINDUNG

Es ist Aufgabe der Erfindung, eine Lamellendichtung zu schaffen und ein Verfahren zu deren Herstellung anzugeben, welche auf einfache Weise einen präzisen Abstand der Lamellen untereinander ermöglichen und gleichzeitig eine Verbindung zwischen den Lamellen realisieren, die sich durch eine hohe mechanische Robustheit auszeichnet.

Die Aufgabe wird durch die Gesamtheit der Merkmale der Ansprüche 1 und 6 gelöst. Der Kern der Erfindung besteht darin, die Lamellen durch zwischengelegte Hartlötfolien zu verbinden, die gleichzeitig als Distanzelemente eingesetzt sind. Hierdurch werden sichere Verbindungen zwischen den Lamellen bei gleichzeitiger Einhaltung eines präzisen Abstandes erreicht.

Bevorzugt wird dabei der Abstand zwischen benachbarten Lamellen im wesentlichen durch die Dicke der dazwischenliegenden Hartlötfolie bestimmt.

Besonders einfach lässt sich die Erfindung verwirklichen, wenn gemäss einer bevorzugten Ausgestaltung die Hartlötfolien aus einer Legierung bestehen, welche ein relativ grosses Schmelzintervall, vorzugsweise mehr als 50°C, aufweist. Grosse Schmelzintervalle ergeben geringere Anforderungen für die Einhaltung der optimalen Löttemperaturen. Dies ist entscheidend, um den Prozess robust zu machen und konstante Qualität des Endprodukts zu gewährleisten.

Weiterhin ist es von Vorteil, wenn die Lamellen aus einem Material bestehen, welches über das Schmelzintervall der Hartlötfolien hinaus fest bleibt. In diesem Fall kann der Verbindungs- bzw. Hartlötvorgang auf einfache Weise durch eine präzise Einstellung und Konstanthaltung der Löttemperatur durchgeführt werden.

Eine bevorzugte Ausgestaltung des erfindungsgemässen Verfahrens zeichnet sich dadurch aus, dass Hartlötfolien aus einer Legierung verwendet werden, welche ein zwischen einer Solidustemperatur und einer Liquidustemperatur liegendes Schmelzintervall aufweisen, und dass die vorgegebene Aufwärmtemperatur nur wenig oberhalb der Solidustemperatur der Hartlötfolie liegt.

Besonders genau lässt sich dabei der Abstand zwischen den Lamellen einstellen, wenn die als Distanzelemente verwendeten Hartlötfolien durch ein Präzisions-Metallfolien-Schneid- oder Stanzverfahren, insbesondere mittels eines Drahterosionsverfahrens oder photochemischen Bearbeitungsverfahrens, hergestellt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung, wie sie bei einer Gasturbine Anwendung findet;
- Fig. 2: in der Seitenansicht in Achsrichtung die aus der radialen Richtung geneigte Anordnung einzelner Lamellen mit ihren dazwischen liegenden Distanzelementen;
- Fig. 3: die Ansicht einer zu Fig. 1 vergleichbaren Lamellendichtung in Umfangsrichtung mit einer vorderen und hinteren Endplatte;
- Fig. 4: die DTA (Differential-Thermo-Analyse)-Messkurve einer typischen Hartlötlegierung, wie sie für die vorliegende Erfindung eingesetzt wird;
- Fig. 5: den Ausschnitt aus einer herkömmlichen Konfiguration zum Hartlöten der Lamellen (und Distanzelemente) einer Lamellendichtung;
- Fig. 6: den aus der Konfiguration nach Fig. 5 hervorgehenden Endzustand der Lamellendichtung;
- Fig. 7: die photographische Aufnahme einer Hartlötung von Lamellen nach dem erfindungsgemässen Prinzip, wobei durch die Wahl einer zu hohen Löttemperatur ein unerwünschtes Verkleben der Lamellen auftritt; und
- Fig. 8: eine zu Fig. 7 vergleichbaren Aufnahme einer bei einer optimalen Löttemperatur knapp oberhalb der Solidustemperatur vorgenommenen Hartlötung nach der Erfindung.

### WEGE ZUR AUSFÜHRUNG DER ERFINDUNG

In Fig. 1 ist in einer perspektivischen Seitenansicht der typische Aufbau einer Lamellendichtung dargestellt, wie sie bei einer Gasturbine Anwendung findet. Die Lamellendichtung 12 dichtet eine in Pfeilrichtung rotierende Rotorwelle 11 der Gasturbine 10 gegen ein Gehäuse 14. Im kreisringförmigen Zwischenraum zwischen der Rotorwelle 11 und dem Gehäuse 14 ist in einem Ring ein Paket von eng voneinander beabstandeten dünnen Lamellen 13 angeordnet. Die Lamellen 13 sind mit ihrer Fläche parallel zur Drehachse der Maschine orientiert. Die Lamellen sind gemäss Fig. 2 aus der radialen Richtung um einen Winkel w1 verkippt und haben zwischen sich jeweils einen schmalen Spalt bzw. Zwischenraum 18, der vorzugsweise durch zwischen den Lamellen 13 angeordnete Distanzelemente 17 festgelegt wird.

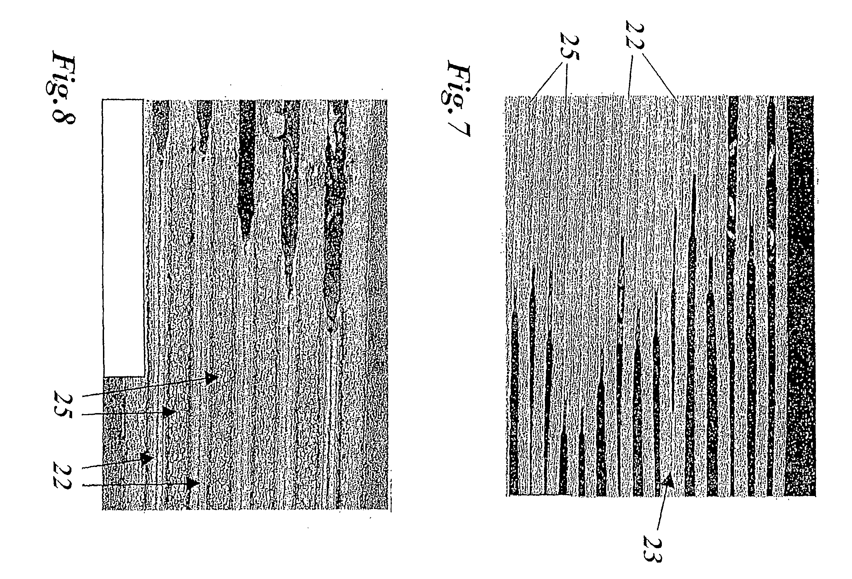

Fig. 7 und Fig. 8 zeigen jeweils die Situation, bei denen die Distanzelemente aus Hartlotfolie 22 gefertigt und zwischen den Lamellen 13 platziert wurden.
Gemäss Fig. 1 und 3 kann der Luftstrom durch die Lamellen 13 durch Verwendung einer vorderen und einer hinteren Endplatte 15 bzw. 16 verändert werden, die einen schmalen Spalt zwischen den Oberflächen des Lamellenpakets und den Endplatten 15, 16 frei lassen (Abstände a und b in Fig. 3). Ein sorgfältiges Design dieser Geometrien macht es möglich, die eingangs erwähnten Aufwärts-oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des in Fig. 1 bzw. 3 dargestellten Lamellendichtungskonzeptes ist eine grössere Toleranz der Radialbewegung als bei den Labyrinth- oder Bürstendichtungen. Dies erfordert einen grossen Abstand zwischen dem inneren Durchmesser der vorderen und rückseitigen Endplatten 15, 16 und der Rotorwelle 11 (Abstände c und d in Fig. 3). Der Spalt zwischen den Lamellen 13 und der Rotorwelle (Abstand e in Fig. 3) beträgt nur wenige Mikron.

Die vorliegende Erfindung bezieht sich auf den Verbindungsprozess innerhalb der Herstellung von Lamellendichtungen. Prinzipiell jedoch könnte sie auch in anderen ähnlichen Verbindungsanwendungen eingesetzt werden, in denen es Schwierigkeiten gibt, das Hartlot an die richtigen Stellen fließen zu lassen. Die Lamellen für Lamellendichtungen sind gewöhnlich zwischen 20 und 200 µm in der Stärke, und die Luftspalte zwischen den Lamellen liegen typischerweise in derselben Grössenordnung . Bei konventionellen Hartlöttechniken wird die Verbindung einer solchen Struktur durch den Fluss flüssigen Lotmaterials zwischen die Lamellen erreicht. Da die diesem Prozess zu Grunde liegenden Kapillarkräfte empfindlich von der Spaltbreite abhängen, ist der Fluss des Lots jedoch schwer zu kontrollieren.

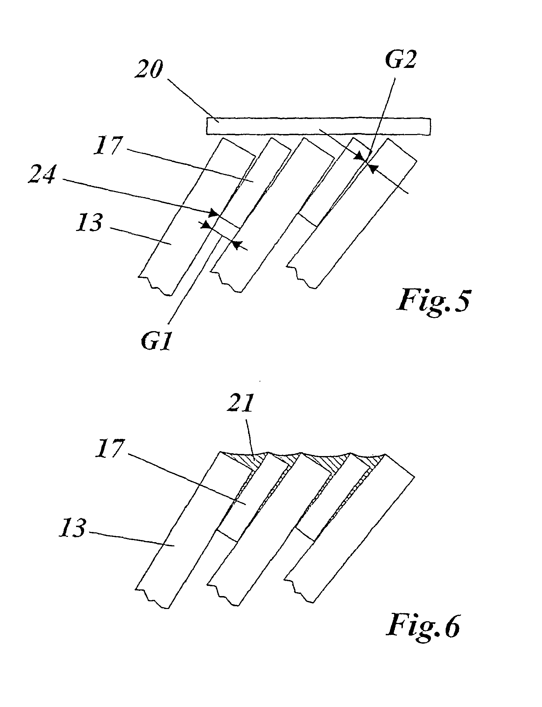

Dies kann am Beispiel der Fig. 5 und 6 deutlich gemacht werden. In den beiden Figuren sind schräg angeordnete Lamellen 13 einer Lamellendichtung gezeigt, die durch Distanzelemente 17 voneinander beabstandet sind und daher Spalte G1 (von typischerweise 50 µm) aufweisen. Aufgrund der kreisringförmigen Gestalt der Lamellendichtung ergeben sich bei Lamellen 13 und Distanzelementen 17 konstanter Dicke keilförmige Spalte G2 (in der Grössenordnung von 5-10 µm) zwischen den Distanzelementen 17 und Lamellen 13, die bis zu den Metall-Metall-Kontakten 24 hinunterreichen. Sollen die Lamellen 13 und Distanzelemente 17 in der gezeigten Position miteinander hart verlötet werden, wird beim herkömmlichen Lötverfahren eine Hartlötfolie (oder - Paste) 20 auf die Aussenseite aufgelegt (Fig. 5).

Das Hartlot der Hartlötfolie 20 beginnt beim herkömmlichen Verfahren den Verbindungsprozess fernab von den zu verbindenden Oberflächen, und erreicht seine abschließende Position nur durch einen kapillaren Fluss aufgrund der Oberflächenspannung in die Spalte G2, wo es dann als erstarrtes Hartlot 21 die Verbindung bewirkt (Fig. 6). Das Problem mit der Geometrie der Lamellendichtung ist, dass die Oberflächen, die verbunden werden sollen, einander zu nah sind für die herkömmliche Hartlöttechnik, um ein Eindringen des flüssigen Hartlots zu erlauben. Eine gute, starke Hartlötverbindung am richtigen Platz zu erhalten, kann daher schwierig sein. Ausserdem müssen die Lamellen einen Luftspalt (G1) behalten, der über den grössten Teil ihrer Länge hinunterreicht. Dieser Luftspalt liegt gewöhnlich mitten im für die Kapillarkräfte optimalen Bereich, um das Hartlot hineinzuziehen. Sollte dieser Spalt mit flüssiger Lötlegierung gefüllt werden, würde dies für die Lamellendichtung verhängnisvoll sein.

Wie in Fig. 5 und 6 mit typischen, illustrativen Massen schematisch veranschaulicht, würde der Hartlötprozess bei einer herkömmlichen Vorgehensweise die alternierende Zusammenstellung der Lamellen 13 und separaten Distanzelemente 17 mit einbeziehen, sowie eine in der Nähe platzierte Quelle einer Hartlotlegierung (Hartlötfolie 20), die bereit ist, an die entsprechenden Stellen zu fliessen, wenn sie schmilzt. Es ist klar, dass ein ähnlicher Effekt mit Lamellenkomponenten erzielt werden kann, die einen verdickten Abschnitt haben, der als ein integrales Distanzelement wirkt, obgleich hierbei weniger Lotlegierung benötigt würde, um eine Verbindung zu erreichen.

In diesem Beispiel müsste die Hartlotlegierung den Weg zu ihrer gewünschten endgültigen Position beginnen, indem sie durch einen Spalt (G2) mit einer Breite von 5 bis 10 µm fliesst, die sich dann bis auf Null verringert (beim Metall-Metall-Kontakt 24). Wenn sie bis dahin kommt, nämlich zu den Metall-Metall-Berührungspunkten der Lamellen 13 und Distanzelemente 17, muss sie stoppen, bevor sie hinunter in den Luftspalt (G1) fliesst. Es ist für die Funktionalität der Lamellendichtung wesentlich, dass der Luftspalt nicht mit Lot gefüllt wird.

Kommerzielle Hartlotlegierungen gehen von optimalen Lötspalten zwischen 10 - 150 µm aus. Das beste, was man unter diesen Umständen hoffen kann, ist, dass das flüssige Hartlot anfängt, in die Spalte G2 zwischen den Lamellen 13 und den Distanzelementen 17 zu fliessen, die gewöhnlich zwischen 5 und 10 µm sind. Das Einfliessen des Lotes bis zum Ende des Spaltes dürfte schwerlich zu garantieren sein, selbst unter den bestmöglichen Benetzungsbedingungen. Andererseits ist der Luftspalt (G1) zwischen den Lamellen gewöhnlich mitten im optimalen Bereich, so dass es ebenso schwierig ist, sicherzustellen, dass das flüssige Lot nicht hineinfliesst.

Hartlötlegierungen sind weiterhin häufig den Legierungen (der Lamellen) ähnlich, die sie verbinden sollen, außer dass sie mit den Schmelzpunkt unterdrückenden Elementen wie z.B. Bor oder Silizium legiert sind. Diese Zusätze geben der Legierung die gewünschten Schmelzeigenschaften.

Die vorliegende Erfindung stützt sich unter anderem darauf, aus den Schmelzeigenschaften zumindest einiger Hartlötlegierungen Vorteile zu ziehen:

Nach dem Erwärmen beginnt ein reines Metall bei seiner Schmelztemperatur zu schmelzen, und jede mögliche Zunahme der Rate der Wärmezufuhr führt lediglich zu einer erhöhten Rate des Schmelzens, und nicht zu einer Zunahme der Temperatur. Schließlich ist das ganze Metall flüssig, und erst dann beginnt die Temperatur des flüssigen Metalls, sich weiter zu erhöhen. Reine Metalle haben wohldefinierte, isotherme Schmelzpunkte. Die meisten Legierungen dagegen schmelzen über einen Temperaturbereich (Schmelzintervall). Nach dem Erwärmen beginnt die Legierung, bei einer Temperatur zu schmelzen, die als die Solidustemperatur bekannt ist. An diesem Punkt ist die Menge des vorliegenden flüssigen Metalls infinitesimal, aber sie bleibt im Gleichgewicht mit dem festen Metall um sie herum, und zwar so lange, wie es keine Änderung in der Temperatur (oder in der Zusammensetzung der Legierung) gibt. Nach weiterer Erwärmung erhöht sich die Temperatur der halb-flüssigen Legierung ebenso, wie der Anteil der Flüssigkeit, die im Gleichgeweicht mit dem festen Material ist. Dies geht weiter, bis die ganze Legierung flüssig ist, was bei der Liquidustemperatur geschieht; danach erhöht sich die Temperatur in gleicher Weise wie bei einem reinen Metall.

Analytisch kann dies mit der Differentialthermoanalyse (DTA) gemessen werden. Diese verwendet den Nettowärmefluss in eine Probe der Legierung hinein oder aus der Probe heraus, um das Einsetzen und den Abschluss der metallurgischen Reaktionen, wie z.B. des Schmelzens, aufzuzeichnen. Unstetigkeiten im Wärmefluss sind dabei ein Zeichen dafür, dass entweder eine endotherme oder eine exotherme Reaktion stattfindet. Ein Beispiel für eine kommerzielle Ni-basierte Hartlötlegierung ist in Figur 4 gezeigt.

Bei irgendeiner Temperatur zwischen der Solidustemperatur und der Liquidustemperatur bleibt das Verhältnis von festen Anteilen zu flüssigen Anteilen gleich, wenn die Legierung auf einer konstanten Temperatur gehalten wird. Dieser Zustand wird - in der Theorie - unbegrenzt fortdauern, vorausgesetzt, dass sich die Zusammensetzung der Legierung nicht durch Diffusion oder allfällige Verflüchtigungsmechanismen ändert. Eine Änderung der Temperatur innerhalb der Grenzen des Solidus-Liquidus-Bereichs (Schmelzintervalls) ändert das Verhältnis von fest zu flüssig. Dieses ist die Grundlage der vorliegenden Erfindung.

Wechselnde Lagen von Lamellen und Distanzelementen werden analog zu Fig. 2 in eine (nicht dargestellte) geeignete Spannvorrichtung hinein zusammengebaut die den Temperaturen des Hartlötprozesses standhalten kann. Jedoch bestehen im vorliegenden Fall die Distanzelemente aus der Hartlötlegierung selbst. Es ist entscheidend, dass das Distanzelement seine Dicke beibehält, um einen Luftspalt (G1 in Fig. 5) zwischen den Lamellen zur Verfügung zu stellen. Gleichzeitig muss jedoch genügend flüssiges Metall erzeugt werden, um eine sichere metallurgische Bindung zwischen benachbarten Lamellen zu gewährleisten. In dieser Hinsicht ist die Steuerung der Temperatur offensichtlich besonders kritisch. Jedoch kann die Verwendung einer Hartlötlegierung mit einem breiten Schmelzintervall helfen, die Empfindlichkeit gegenüber Temperaturänderungen zu verringern. Im Fall der weiter oben gezeigten DTA-Kurve beträgt der Schmelzbereich beispielsweise über 90°C. Bevorzugt sind Hartlötlegierungen mit einem Schmelzintervall >50°C zu verwenden.

Eine exakte Steuerung der Position und der Menge der Hartlötlegierung kann dadurch erzielt werden, dass zur Formung der Hartlötlegierung ein Präzisions-Schneidverfahren für Metallfolien wie z.B. die Drahterosion oder eine photochemische Bearbeitung, verwendet wird.

In den Fig. 7 und 8 sind Photographien wiedergegeben, um die Resultate des auf Lamellendichtungen angewendeten Hartlötverfahrens nach der Erfindung zu zeigen. Von der Seite gesehen sind hier Lamellen 25 gezeigt, die durch Hartlötfolien 22 miteinander verbunden und voneinander beabstandet sind. In Fig. 7 lag die Löttemperatur höher und damit näher bei der konventionellen Löttemperatur.

Man kann in Fig. 7 erkennen, dass, wenn eine zu hohe Löttemperatur verwendet wird, die Kombination aus dem erhöhten Flüssigkeitsanteil, der erhöhten Fluidität der Flüssigkeit, und der erhöhten Benetzung der Lamellenoberfläche eine verstärkte Wanderung der Flüssigkeit die Länge der Lamelle hinunter (in Fig. 7 nach rechts) verursacht. Dies hat in einigen Fällen sogar das Verkleben der Lamellen 21 in Form einer Verklebung 23 verursacht, die von der ursprünglichen Ausgangsposition der Hartlötlegierung entfernt ist. Bei einer konventionellen Hartlötung, bei der die Löttemperaturen noch höher sind als bei dem in Fig. 7 gezeigten Beispiel, sind die negativen Effekte noch ausgeprägter.

Wenn die Temperatur jedoch ausreichend gut gesteuert wird (Fig. 8), ist die Flüssigkeitsbenetzung gerade ausreichend genug, um die Bildung einer guten Verbindung zu ermöglichen. Unter diesen Bedingungen ist die verbleibende Festigkeit der restlichen festen Hartlötlegierung in den Hartlötfolien 22 ausreichend gross, um Formänderungen (insbesondere Änderungen der Dicke) zu und durch Kapillarkräfte verursachtes Eindringen flüssigen Materials zwischen die Lamellen zu vermeiden.. Nach dem Abkühlen entspricht der Abstand der Lamellen 25 untereinander bei diesem Vorgehen exakt dem durch die ursprüngliche Dicke der Hartlötfolien 22 festgelegten Wert.

### BEZUGSZEICHENLISTE

- 10: Gasturbine
- 11: Rotorwelle
- 12: Lamellendichtung
- 13,25: Lamelle
- 14: Gehäuse
- 15,16: Endplatte
- 17: Distanzelement (separat)
- 18: Spalt (Zwischenraum)
- 19: Gasstrom
- 20,22: Hartlötfolie
- 21: Hartlot
- 23: Verklebung
- 24: Metall-Metall-Kontakt
- a,..,e: Abstand
- G1,G2: Spalt
- w1: Winkel

## Patentansprüche

1. Lamellendichtung (12) zur Abdichtung einer um eine Achse rotierenden Welle, insbesondere in einer Gasturbine (10), welche Lamellendichtung (12) eine Vielzahl von untereinander beabstandeten Lamellen (25) umfasst, die in einem konzentrischen Kreis um die Achse herum angeordnet und mittels Hartlöten in ihrer Position fixiert sind, wobei die Lamellen (25) mit ihren Flächen im wesentlichen parallel zu der Achse orientiert sind, **dadurch gekennzeichnet, dass** die Lamellen (25) über zwischenliegende Distanzelemente miteinander hart verlötet sind, dass die Distanzelemente aus einer Hartlötfolie (22) bestehen, und dass die Hartlötverbindung durch Hartlot aus den Hartlötfolien (22) selbst bewirkt wird.

2. Lamellendichtung nach Anspruch 1, **dadurch gekennzeichnet, dass** der Abstand zwischen benachbarten Lamellen (25) im wesentlichen durch die Dicke der dazwischenliegenden Hartlötfolie (22) bestimmt wird.

3. Lamellendichtung nach Anspruch 1 oder 2, **dadurch gekennzeichnet, dass** die Hartlötfolien (22) aus einer Legierung bestehen, welche ein Schmelzintervall aufweist.

4. Lamellendichtung nach Anspruch 3, **dadurch gekennzeichnet, dass** das Schmelzintervall >50°C beträgt.

5. Lamellendichtung nach Anspruch 3 oder 4, **dadurch gekennzeichnet, dass** die Lamellen (25) aus einem Material bestehen, welches über das Schmelzintervall der Hartlötfolien (22) hinaus fest bleibt.

6. Verfahren zum Herstellen einer Lamellendichtung nach Anspruch 1, **dadurch gekennzeichnet, dass** die einzelnen Lamellen,(25) unter Zwischenlage von Hartlötfolien (22) als Distanzelementen in ihren für die spätere Lamellendichtung charakteristischen Positionen angeordnet und fixiert werden, und dass das Paket aus Lamellen (25) und Distanzelementen auf eine vorgegebene Temperatur erwärmt wird, bei welcher die Hartlötfolien (22) unter weitgehender Beibehaltung ihrer Dicke nur partiell aufschmelzen und die angrenzenden Lamellen (25) benetzen.

7. Verfahren nach Anspruch 6, **dadurch gekennzeichnet, dass** Hartlötfolien (22) aus einer Legierung verwendet werden, welche ein zwischen einer Solidustemperatur und einer Liquidustemperatur liegendes Schmelzintervall aufweisen, und dass die vorgegebene Aufwärmtemperatur nur wenig oberhalb der Solidustemperatur der Hartlötfolie (22) liegt.

8. Verfahren nach Anspruch 6 oder 7, **dadurch gekennzeichnet, dass** die als Distanzelemente verwendeten Hartlötfolien (22) durch ein Präzisions-Metallfolien-Schneid- oder Stanzverfahren hergestellt werden.

9. Verfahren nach Anspruch 8, **dadurch gekennzeichnet, dass** die Hartlötfolien (22) mittels eines Drahterosionsverfahrens oder photochemischen Bearbeitungsverfahrens hergestellt werden.

## Claims

1. Leaf seal (12) for sealing a shaft rotating about an axis, in particular in a gas turbine (10), which leaf seal (12) comprises a multiplicity of spaced-apart leaves (25) which are arranged in a concentric circle around the axis and are fixed in their position by means of brazing, the leaves (25), with their surfaces, being oriented essentially parallel to the axis, **characterized in that** the leaves (25) are brazed to one another via intermediate spacers, **in that** the spacers consist of a brazing foil (22), and **in that** the brazed joint is produced by brazing alloy from the brazing foils (22) themselves.

2. Leaf seal according to Claim 1, **characterized in that** the distance between adjacent leaves (25) is determined essentially by the thickness of the brazing foil (22) lying in between.

3. Leaf seal according to Claim 1 or 2, **characterized in that** the brazing foils (22) consist of an alloy which has a melting interval.

4. Leaf seal according to Claim 3, **characterized in that** the melting interval is > 50°C.

5. Leaf seal according to Claim 3 or 4, **characterized in that** the leaves (25) consist of a material which remains solid beyond the melting interval of the brazing foils (22).

6. Method of producing a leaf seal according to Claim 1, **characterized in that** the individual leaves (25), with brazing foils (22) in between as spacers, are arranged and fixed in their positions characteristic of the subsequent leaf seal, and **in that** the stack of leaves (25) and spacers is heated to a predetermined temperature at which the brazing foils (22), while largely maintaining their thickness, melt only partly and wet the adjoining leaves (25).

7. Method according to Claim 6, **characterized in that** brazing foils (22) are used which consist of an alloy which has a melting interval lying between a solidus temperature and a liquidus temperature, and **in that** the predetermined heating temperature lies only slightly above the solidus temperature of the brazing foil (22).

8. Method according to Claim 6 or 7, **characterized in that** the brazing foils (22) used as spacers are produced by a precision metal-foil cutting or punching method.

9. Method according to Claim 8, **characterized in that** the brazing foils (22) are produced by means of a wire erosion method or photochemical processing method.

## Revendications

1. Joint à lamelles (12) pour l'étanchéité d'un arbre tournant autour d'un axe, notamment dans une turbine à gaz (10), lequel joint à lamelles (12) comprend une pluralité de lamelles (25) espacées les unes des autres qui sont disposées suivant un cercle concentrique autour de l'axe et qui sont fixées en position par brasage dur, les lamelles (25) étant orientées avec leurs faces essentiellement parallèlement à l'axe, **caractérisé en ce que** les lamelles (25) sont brasées dur les unes aux autres par le biais d'éléments d'espacement intermédiaires, **en ce que** les éléments d'espacement se composent d'une feuille de brasure dure (22) et **en ce que** la connexion par brasage dur est provoquée par la brasure dure provenant des feuilles de brasure dure (22) ellesmêmes.

2. Joint à lamelles selon la revendication 1, **caractérisé en ce que** la distance entre les lamelles adjacentes (25) est déterminée essentiellement par l'épaisseur de la feuille de brasure dure (22) interposée entre elles.

3. Joint à lamelles selon la revendication 1 ou 2, **caractérisé en ce que** les feuilles de brasure dure (22) se composent d'un alliage qui présente un intervalle de fusion.

4. Joint à lamelles selon la revendication 3, **caractérisé en ce que** l'intervalle de fusion est >50°C.

5. Joint à lamelles selon la revendication 3 ou 4, **caractérisé en ce que** les lamelles (25) se composent d'un matériau qui reste solide au-delà de l'intervalle de fusion des feuilles de brasure dure (22).

6. Procédé de fabrication d'un joint à lamelles selon la revendication 1, **caractérisé en ce que** les lamelles individuelles (25) sont disposées et fixées dans leurs positions caractéristiques pour le joint à lamelles subséquent en interposant des feuilles de brasure dure (22) servant d'éléments d'espacement, et **en ce que** le paquet de lamelles (25) et d'éléments d'espacement est chauffé à une température prédéfinie à laquelle les feuilles de brasure dure (22) ne fondent que partiellement en conservant largement leur épaisseur et mouillent ainsi les lamelles adjacentes (25).

7. Procédé selon la revendication 6, **caractérisé en ce que** l'on utilise des feuilles de brasure dure (22) en alliage, qui présentent un intervalle de fusion compris entre une température de phase solide et une température de phase liquide et **en ce que** la température de réchauffement prédéfinie se situe seulement légèrement au-dessus de la température de phase solide de la feuille de brasure dure (22).

8. Procédé selon la revendication 6 ou 7, **caractérisé en ce que** les feuilles de brasure dure (22) utilisées comme éléments d'espacement sont fabriquées par un procédé de découpage ou d'estampage de précision de feuilles métalliques.

9. Procédé selon la revendication 8, **caractérisé en ce que** les feuilles de brasure dure (22) sont fabriquées au moyen d'un procédé d'usinage par décharge électrique à fil ou un procédé d'usinage photochimique.
